# EUROPÄISCHE PATENTSCHRIFT

(11) **EP 3 331 810 B1**
(45) Veröffentlichungstag und Bekanntmachung des Hinweises auf die Patenterteilung: **16.09.2020**
(21) Anmeldenummer: 16766833.4
(22) Anmeldetag: 04.08.2016
(51) Int. Cl.: B66F 9/18, B66F 9/12, B66F 9/14, B65G 61/00, B65G 1/04

(54) **VORRICHTUNG ZUM TRANSPORTIEREN EINES TRANSPORTGUTES UND VERFAHREN**
DEVICE FOR TRANSPORTING A TRANSPORT ITEM, AND METHOD
DISPOSITIF DE TRANSPORT D'UN PRODUIT À TRANSPORTER ET PROCÉDÉ

(30) Priorität: 04.08.2015 DE 102015009844
(43) Veröffentlichungstag der Anmeldung: 13.06.2018
(73) Patentinhaber: Kaup GmbH&Co. KG, 63741 Aschaffenburg (DE)
(72) Erfinder: KAUP, Otmar, 63741 Aschaffenburg (DE)
(74) Vertreter: Nitz, Astrid
(86) Internationale Anmeldenummer: PCT/DE2016/000302
(87) Internationale Veröffentlichungsnummer: WO 2017/020885

(56) Entgegenhaltungen:
- WO-A1-2006/078156
- DE-B- 1 208 247
- FR-A- 1 316 425
- GB-A- 2 107 280
- JP-A- H0 769 599
- US-A- 3 598 263
- US-A- 3 820 667
- US-A1- 2007 189 882

## Beschreibung

Die Erfindung betrifft eine Vorrichtung zum Transportieren eines Transportgutes zum Anbringen an ein Hubfahrzeug, insbesondere an einer Transporteinrichtung eines Gabelstaplers, nach dem Oberbegriff von Anspruch 1 und ein Verfahren zur Verwendung einer Vorrichtung zum Transportieren eines Transportgutes nach dem Oberbegriff von Anspruch 10.

Kommissionierungsaufgaben für Lager mit vielen Seitenarmen werden im Stand der Technik gelöst durch beispielsweise Palettenwendegeräte, die Paletten derart zu einem Zeitpunkt drehen, dass die Handhabung des Transportgutes in einer günstigeren Körperhaltung möglich ist. Nachteilig sind hohe Nutzlasten und die Notwendigkeit eines großen Staplers.

US 2007/189882 A1 offenbart eine Ansetzvorrichtung zur Handhabung von Gütern mit aufwendigen Vakuumhaltevorrichtungen, wobei eine komplexe Anordnung benötigt wird, um das Transportgut zu halten. JP H0769599 A offenbart eine Vorrichtung und ein Verfahren gemäß den Oberbegriffen der unabhängigen Ansprüche 1 bzw.10.

Die Aufgabe der vorliegenden Erfindung ist es, eine einfache und zuverlässige Handhabung von Transportgut beim Kommissionieren zu gewährleisten, wobei die damit arbeitenden Personen körperlich entlastet werden.

Die Aufgabe wird gelöst durch eine Vorrichtung zum Transportieren eines Transportgutes zum Anbringen an ein Hubfahrzeug, insbesondere an einer Transporteinrichtung eines Gabelstaplers, insbesondere eines Kommissionierungspakets, insbesondere mit einem Lastgewicht kleiner als etwa 50 kg, umfassend ein Mittel zum zumindest vorübergehenden Aufnehmen des Transportgutes mittels einer Unterdruckeinrichtung und/ eines Förderbandes, wobei die Unterdruckeinrichtung im Wesentlichen in der Waagerechten an das Transportgut anzusetzen ist, und/ das Förderband an einer Unterkante des Transportgutes anzusetzen ist,
wobei die Unterdruckeinrichtung und/ das Förderband an einem Schwenkarm mit einem Schwenkpunkt angeordnet ist, der mittels der Unterdruckeinrichtung und/oder des Förderbandes eine Handhabung des Transportgutes insbesondere ein Schwenken, insbesondere mit einem vorbestimmten Schwenkwinkel, insbesondere von etwa +/- 90°, innerhalb der Waagerechten, und/oder Absetzen des Transportgutes, im Wesentlichen in der Waagerechten ermöglicht.

Bei der Schwenk- und Zuge bzw. Schubbewegung ist im Wesentlichen nur die Überwindung eines Reibwiderstandes durch die Kraft des Unterdrucks notwendig. Es kann somit auch bei einem geringen Unterdruck und/ mittels eines Förderbandes auf dem Schwenkarm gearbeitet werden. Weiterhin kann durch die Schwenkbewegung und Schub- bzw. Zugbewegung auch in schmalen Seitengängen aus Regalen Lasten entnommen werden, gedreht werden und diese zur Kommissionierung auf einer Palette abgesetzt werden. Hierbei ist insbesondere vorteilhaft, dass große Entfernungen, die beim Kommissionieren zwischen Entnahmestelle und einer im Regalgang abgestellten Palette zurückzulegen sind, was zeitaufwendig ist, vermieden werden.

Vorteilhaft ist es, wenn der Schwenkarm mit einem Mittel zum Schwenken, insbesondere einem Ölmotor und/oder einem Mittel zur Längsverstellung längsverstellbar ausgebildet ist, angetrieben insbesondere mittels eines Hydraulikmittels und/oder eines Mittels, das durch einen Ölmotor angetrieben wird.

Vorteilhaft ist es, wenn die Unterdruckeinrichtung längsverschiebbar in Bezug auf den Schwenkarm ausgebildet ist, insbesondere oberhalb oder unterhalb, insbesondere mittels eines Kettenantriebs, der insbesondere mit einem Ölmotor antreibbar ist. Vorteilhaft ist es, wenn der Schwenkarm mit einem Verfahrmittel, insbesondere im Bereich des Schwenkpunktes, seitlich verfahrbar angeordnet ist, insbesondere mittels eines Kettenantriebs, insbesondere angetrieben mit einem Ölmotor, insbesondere angeordnet an einer Transporteinrichtung eines Hubfahrzeugs.

Vorteilhaft ist es, wenn die Unterdruckeinrichtung mit einer zweiten Schwenkeinrichtung von einer Ausrichtung nach unten in eine Ausrichtung in die Waagerechte verschwenkbar eingerichtet ist, wobei zum Transport des Transportgutes hierdurch die Unterdruckeinrichtung in die Waagerechte zu verschwenken ist.

Vorteilhaft ist es, wenn die Unterdruckeinrichtung auf dem Schwenkarm verfahrbar angeordnet ist, so dass das Transportgut mittels der Unterdruckeinrichtung aufnehmbar und auf dem Schwenkarm zumindest vorübergehend aufziehbar abgesetzt und/oder abschiebbar ist.

Vorteilhaft ist es, wenn ein Mittel zum Mittransport einer Palette vorgesehen ist, wobei insbesondere zwei oder mehrere Gabeln vorgesehen sind, auf denen die Palette mitzuführen ist und mit dem Transportgut zu beladen und/oder entladen ist, insbesondere umfassend Gabelstummeln mit aufsteckbaren Gabelschuhen und/oder Gabeln, die mit Förderbändern zur Aufnahme und/oder zum Absetzen der Palette ausgerüstet sind.

Vorteilhaft ist es, wenn die Unterdruckeinrichtung durch eine Vakuumpumpe, insbesondere angeordnet im Bereich zwischen Schwenkarm und Verfahrmittel, mit Unterdruck versorgt ist, wobei die Vakuumpumpe insbesondere durch einen Elektromotor und/oder einen Ölmotor angetrieben ist, und/oder durch einen Kombinationsmittel umfassend Hydraulikzylinder und/oder Luftzylinder und/oder Vorspannventil, insbesondere angetrieben durch einen Ölmotor, so dass insbesondere zunächst durch den Hydraulikzylinder mit dem Luftzylinder ein Unterdruck zu erzeugen ist und anschließend die Verfahrbewegung auf dem Schwenkarm ausführbar ist.

Vorteilhaft ist es, wenn die Unterdruckeinrichtung einen oder mehrere Unterdrucksaugnäpfe umfasst, die insbesondere nebeneinander angeordnet sind.

Die Aufgabe wird ebenfalls gelöst durch ein Verfahren zur Verwendung einer Vorrichtung zum Transportieren eines Transportgutes, insbesondere eines Kommissionierungspakets, insbesondere mit einem Lastgewicht kleiner als etwa 50 kg, wobei die Vorrichtung zum Anbringen an eine Transporteinrichtung an ein Hubfahrzeug, insbesondere an einen Gabelstapler geeignet ist, umfassend ein Mittel zum zumindest vorübergehenden Aufnehmen das Transportgut mittels einer Unterdruckeinrichtung und/ eines Förderbandes aufgenommen wird, wobei die Unterdruckeinrichtung im Wesentlichen waagerecht an das Transportgut angesetzt wird und/ das Förderband an einer Unterkante des Transportgutes angesetzt wird, wobei die Unterdruckeinrichtung und/ das Förderband an einem Schwenkarm mit einem Schwenkpunkt angeordnet ist, so dass mittels der Unterdruckeinrichtung und/oder des Förderbandes das Transportgut im Wesentlichen in der Waagerechten um einen vorbestimmten Schwenkwinkel geschwenkt wird, insbesondere um etwa +/- 90°, und/oder auf den Schwenkarm mittels Verfahren der Unterdruckeinrichtung und/oder des Förderbandes aufgezogen und wieder abgeschoben wird.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1a: Vorrichtung zum Transportieren,
- Fig. 1b: Vorrichtung zum Transportieren,
- Fig. 1c: Vorrichtung zum Transportieren,
- Fig. 1d: Vorrichtung zum Transportieren,
- Fig. 2a: Vorrichtung zum Transportieren in Seitenschnitt,
- Fig. 2b: Vorrichtung zum Transportieren in Aufsicht,
- Fig. 3: Vorrichtung zum Transportieren,
- Fig. 4: Vorrichtung zum Transportieren und
- Fig. 5: Vorrichtung zum Transportieren, mit Gabelstummeln.

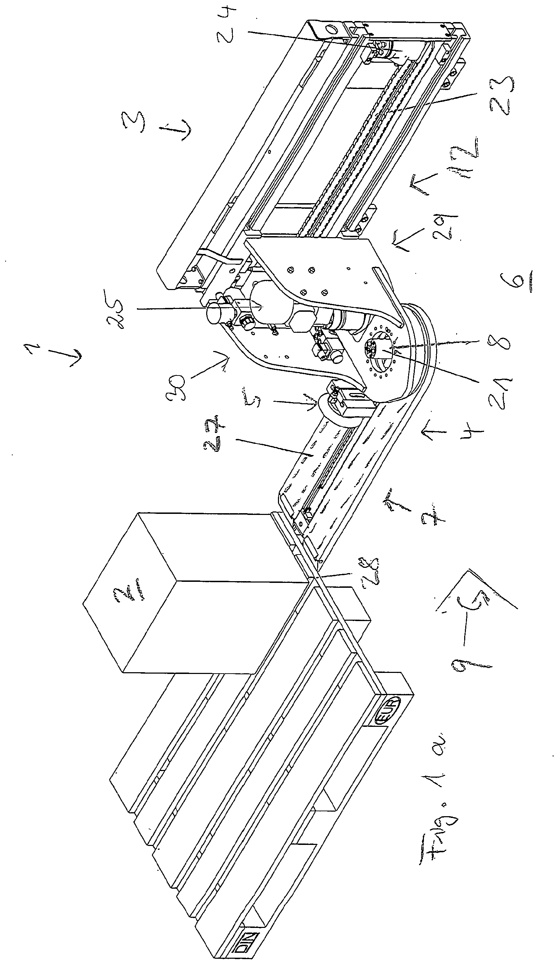

Fig. 1a zeigt eine Vorrichtung zum Transportieren 1 eines Transportgutes 2 zum Anbringen an ein nicht dargestelltes Hubfahrzeug, insbesondere an einer Transporteinrichtung 3 eines Gabelstaplers, insbesondere eines Kommissionierungspakets, insbesondere mit einem Lastgewicht kleiner als etwa 50 kg.

Die Vorrichtung umfasst ein Mittel 4 zum zumindest vorübergehenden Aufnehmen des Transportgutes 2 mittels einer Unterdruckeinrichtung 5 und/ eines Förderbandes 27, wobei die Unterdruckeinrichtung 5 im Wesentlichen in der Waagerechten 6 an das Transportgut 2 anzusetzen ist, und/oder das Förderband 27 an einer Unterkante 28 des Transportgutes anzusetzen ist, wobei die Unterdruckeinrichtung 5 und/ das Förderband 27 an einem Schwenkarm 7 mit einem Schwenkpunkt (8) angeordnet ist, der mittels der Unterdruckeinrichtung 5 und/ des Förderbandes 27 eine Handhabung des Transportgutes 2, insbesondere ein Schwenken, insbesondere mit einem vorbestimmten Schwenkwinkel 9, insbesondere von etwa +/- 90°, innerhalb der Waagerechten 6, und/oder Absetzen des Transportgutes 2, im Wesentlichen in der Waagerechten 6 ermöglicht.

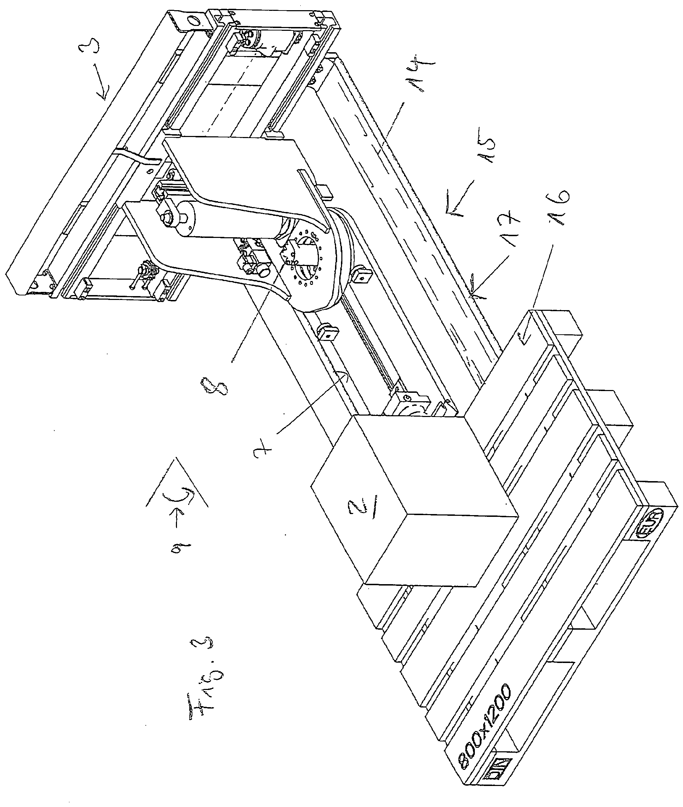

Optional zusätzlich oder alternativ zur Unterdruckeinrichtung 5 sind Förderbänder 27 auf dem Schwenkarm 7 angeordnet gezeichnet. Auf einem Schwenkarm 7 ist ein verschiebbarer Saugnapf angeordnet, der seitlich an ein Transportgut 2, beispielsweise einen Karton, herangeführt werden kann. Mittels Unterdruck und/ Förderband 27 kann die Last nahezu bis zum Schwenkpunkt 8 zurückgezogen werden und um etwa 90 ° in der Waagerechten geschwenkt werden. Anschließend erfolgt beispielhaft ein Abschieben in eine Fahrtrichtung des Hubfahrzeugs, beispielsweise auf eine auf den Gabeln gehaltene Palette 16, wie in Fig. 3 dargestellt.

Der Gabelstapler verfährt beispielhaft parallel zu einem Regal bis zu einem jeweiligen Transportgutstellplatz. Dort schwenkt er die Vorrichtung um 90° ins Regal. Nach dem Ausfahren der Verschiebeeinrichtung und Absenken des Gerätes auf die Last wird die Vakuumeinheit aktiviert. Durch den Unterdruck gehalten, kann die Last angehoben und durch Verfahren der verschiebbaren Einheit aus dem Regal befördert werden bis sich diese etwa mittig zum Drehgerät befindet. Alternativ oder ergänzend kann auf dem Schwenkarm eine oder mehrere Förderbänder zum Hinaufbefördern und/oder Abschieben des Transportgutes vorgesehen sein, wobei dies alternativ zu der Unterdruckeinrichtung oder ergänzend dazu vorgesehen sein kann. Danach kann die Last um etwa 90° gedreht und dann beispielsweise auf einer sich im Gang befindlichen Palette oder einen Wagen abgesetzt werden. Nach dem Ablegen und Deaktivieren des Unterdrucks kann das Gerät angehoben und für den nächsten Kommissioniervorgang eingerichtet werden.

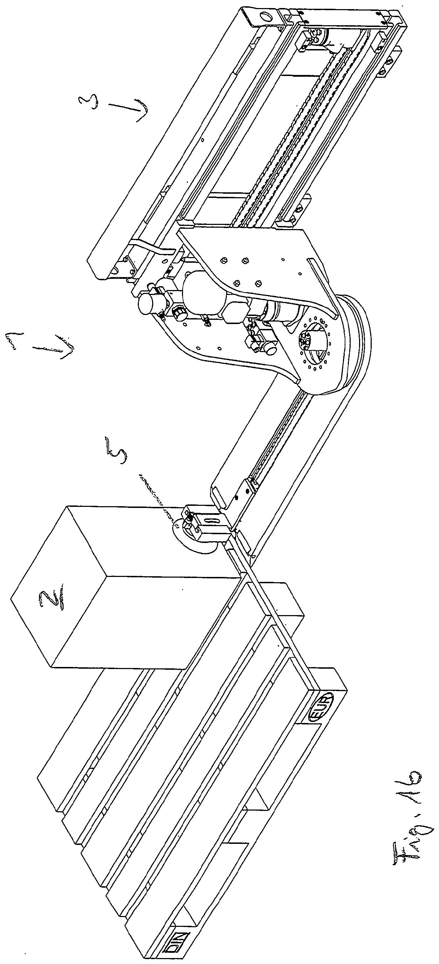

Fig. 1b zeigt eine Vorrichtung 1 zum Transportieren an einer Transporteinrichtung 3, bei der die Unterdruckeinrichtung 5 an das Transportgut 2 angesetzt ist.

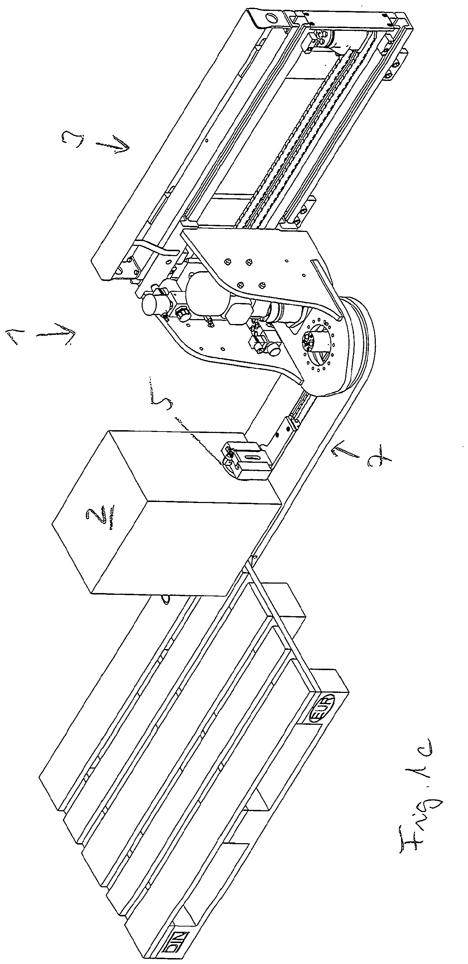

Fig. 1c zeigt eine Vorrichtung 1 zum Transportieren an einer Transporteinrichtung 3, bei der die Unterdruckeinrichtung 5 an das Transportgut 2 angesetzt ist und ein Zurückziehen des Transportgutes 2 auf den Schwenkarm 7 teilweise erfolgt ist.

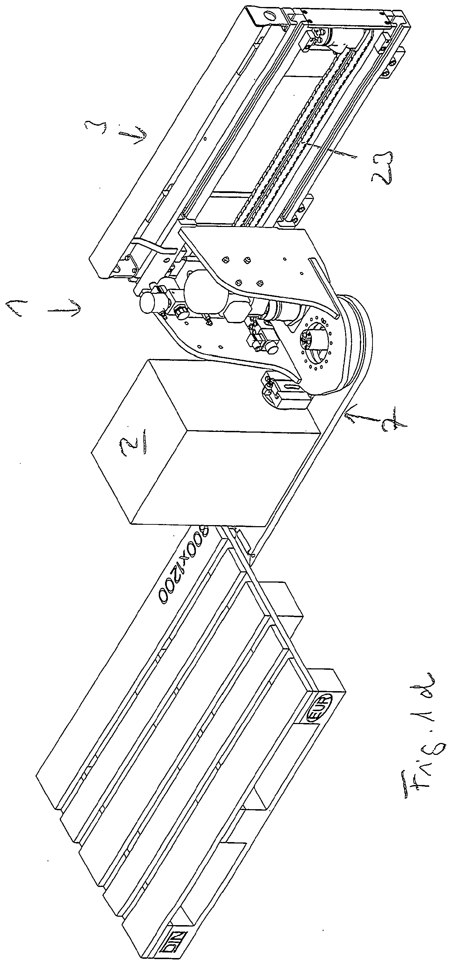

Fig. 1d zeigt eine Vorrichtung 1 zum Transportieren an einer Transporteinrichtung 3, bei der die Unterdruckeinrichtung 5 an das Transportgut 2 angesetzt ist und ein Zurückziehen des Transportgutes 2 auf den Schwenkarm 7 vollständig erfolgt ist.

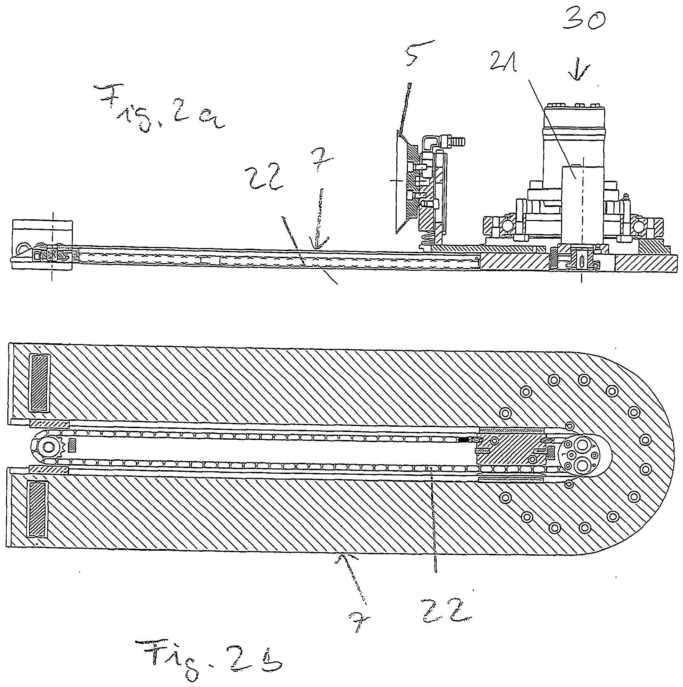

Fig. 2a zeigt eine Vorrichtung 1 zum Transportieren in einer Seitenschnittdarstellung. Eine Unterdruckeinrichtung 5 wird mittels eines Kettenantriebs 22, der in dem Schwenkarm 7 angeordnet ist und durch einen Ölmotor 21 angetrieben wird, vor- und zurück bewegt.

Fig. 2b zeigt eine Vorrichtung 1 zum Transportieren, entsprechend Fig. 2a, in Aufsicht.

Fig. 3 zeigt eine Vorrichtung 1 zum Transportieren an einer Transporteinrichtung 3 mit einem Mittel 15 zum Mittransport einer Palette 16, wobei insbesondere zwei oder mehrere Gabeln 17 vorgesehen sind, auf denen die Palette 16 mitzuführen ist und mit dem Transportgut 2 zu beladen und/oder entladen ist, insbesondere umfassend Gabelstummeln 18 mit aufsteckbaren Gabelschuhen 19 und/oder Gabeln, die mit Förderbändern 14 zur Aufnahme und/oder zum Absetzen der Palette ausgerüstet sind. Das Transportgut 2, das mit dem Schwenkarm 7 beispielsweise aus einem nicht dargestellten seitlichen Regal herausbefördert wurde, wird auf der Palette 16 abgestellt.

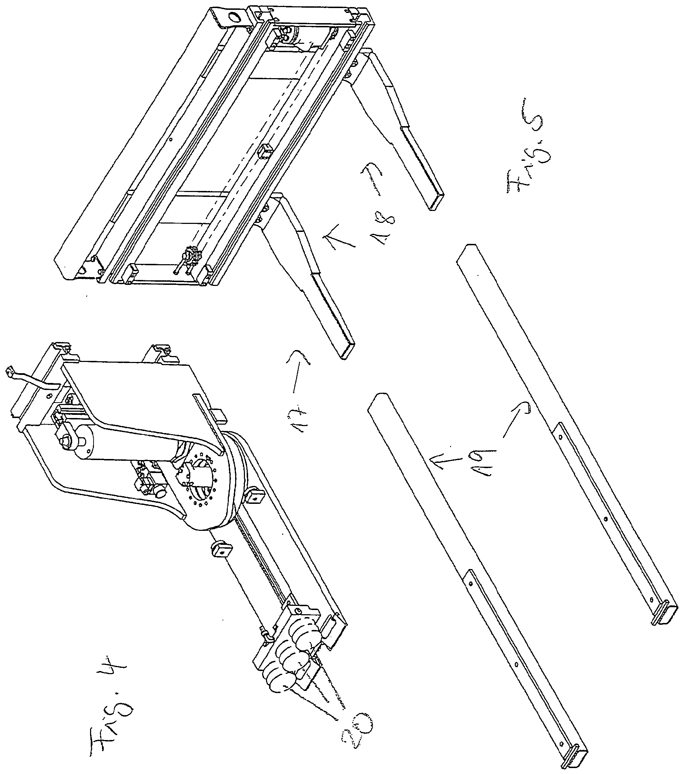

Fig. 4 zeigt ein Mittel 4 zum zumindest vorübergehenden Aufnehmen eines Transportgutes einer Vorrichtung zum Transportieren an einer Transporteinrichtung für einen Gabelstapler mit drei, nebeneinander angeordneten Unterdrucksaugnäpfen 20.

Fig. 5 zeigt eine Vorrichtung 1 mit einem Gabelstummel 18 und aufsetzbaren Gabelschuhen 19, die als Gabel 17 fungieren können.

### BEZUGSZEICHENLISTE

- 1: Vorrichtung zum Transportieren
- 2: Transportgut
- 3: Transporteinrichtung
- 4: Mittel zum zumindest vorübergehenden Aufnehmen
- 5: Unterdruckeinrichtung
- 6: Waagerechte
- 7: Schwenkarm
- 8: Schwenkpunkt
- 9: Schwenkwinkel
- 12: Verfahrmittel
- 14: Förderband
- 15: Mittel zum Mittransport
- 16: Palette
- 17: Gabel
- 18: Gabelstummel
- 19: Gabelschuh
- 20: Unterdrucksaugnapf
- 21: Ölmotor für Unterdruckeinrichtung
- 22: Kettenantrieb
- 23: Kettenantrieb
- 24: Ölmotor
- 25: Vakuumpumpe
- 27: Förderband
- 28: Unterkante
- 29: Bereich zwischen Schwenkarm und Verfahrmittel
- 30: Ölmotor

## Patentansprüche

1. Vorrichtung (1) zum Transportieren eines Transportgutes (2) zum Anbringen an ein Hubfahrzeug, insbesondere an einer Transporteinrichtung (3) eines Gabelstaplers, insbesondere eines Kommissionierungspakets, insbesondere mit einem Lastgewicht kleiner als etwa 50 kg, umfassend ein Mittel (4) zum zumindest vorübergehenden Aufnehmen des Transportgutes (2) mittels einer Unterdruckeinrichtung (5) und/ eines Förderbandes (27), wobei die Unterdruckeinrichtung (5) im Wesentlichen in der Waagerechten (6) an das Transportgut (2) anzusetzen ist, und/ das Förderband (27) an einer Unterkante (28) des Transportgutes anzusetzen ist,
**dadurch gekennzeichnet, dass** die Unterdruckeinrichtung (5) und/ das Förderband (27) an einem Schwenkarm (7) mit einem Schwenkpunkt (8) angeordnet ist, der mittels der Unterdruckeinrichtung (5) und/oder des Förderbandes (27) eine Handhabung des Transportgutes (2), insbesondere ein Schwenken, insbesondere mit einem vorbestimmten Schwenkwinkel (9), insbesondere von etwa +/- 90°, innerhalb der Waagerechten (6), und/oder Absetzen des Transportgutes (2), im Wesentlichen in der Waagerechten (6) ermöglicht.

2. Vorrichtung nach Anspruch 1, **dadurch gekennzeichnet, dass** der Schwenkarm (7) mit einem Mittel zum Schwenken, insbesondere einem Ölmotor (30) und/oder einem Mittel zur Längsverstellung längsverstellbar ausgebildet ist, angetrieben insbesondere mittels eines Hydraulikmittels und/oder eines Mittels, das durch einen Ölmotor angetrieben wird.

3. Vorrichtung nach Anspruch 1 oder 2, **dadurch gekennzeichnet, dass** die Unterdruckeinrichtung (5) längsverschiebbar in Bezug auf den Schwenkarm (7) ausgebildet ist, insbesondere oberhalb oder unterhalb, insbesondere mittels eines Kettenantriebs (22), der insbesondere mit einem Ölmotor (21) antreibbar ist.

4. Vorrichtung nach einem der Ansprüche 1 bis 3, **dadurch gekennzeichnet, dass** der Schwenkarm (7) mit einem Verfahrmittel (12), insbesondere im Bereich des Schwenkpunktes (8), seitlich verfahrbar angeordnet ist, insbesondere mittels eines Kettenantriebs (23), insbesondere angetrieben mit einem Ölmotor (24), insbesondere angeordnet an einer Transporteinrichtung (3) eines Hubfahrzeugs.

5. Vorrichtung nach einem der Ansprüche 1 bis 4, **dadurch gekennzeichnet, dass** die Unterdruckeinrichtung (5) mit einer zweiten Schwenkeinrichtung von einer Ausrichtung nach unten in eine Ausrichtung in die Waagerechte (6) verschwenkbar eingerichtet ist, wobei zum Transport des Transportgutes (2) hierdurch die Unterdruckeinrichtung (5) in die Waagerechte (6) zu verschwenken ist.

6. Vorrichtung nach einem der Ansprüche 1 bis 5, **dadurch gekennzeichnet, dass** die Unterdruckeinrichtung (5) auf dem Schwenkarm (7) verfahrbar angeordnet ist, so dass das Transportgut (2) mittels der Unterdruckeinrichtung (5) aufnehmbar und auf dem Schwenkarm (7) zumindest vorübergehend aufziehbar abgesetzt und/oder abschiebbar ist.

7. Vorrichtung nach einem der Ansprüche 1 bis 6, **dadurch gekennzeichnet, dass** ein Mittel (15) zum Mittransport einer Palette (16) vorgesehen ist, wobei insbesondere zwei oder mehrere Gabeln (17) vorgesehen sind, auf denen die Palette (16) mitzuführen ist und mit dem Transportgut (2) zu beladen und/oder entladen ist, insbesondere umfassend Gabelstummeln (18) mit aufsteckbaren Gabelschuhen (19) und/oder Gabeln, die mit Förderbändern (14) zur Aufnahme und/oder zum Absetzen der Palette ausgerüstet sind.

8. Vorrichtung nach einem der Ansprüche 1 bis 7, **dadurch gekennzeichnet, dass** die Unterdruckeinrichtung (5) durch eine Vakuumpumpe (25), insbesondere angeordnet im Bereich (29) zwischen Schwenkarm (7) und Verfahrmittel (12), mit Unterdruck versorgt ist, wobei die Vakuumpumpe (25) insbesondere durch einen Elektromotor und/oder einen Ölmotor angetrieben ist, und/oder durch einen Kombinationsmittel umfassend Hydraulikzylinder und/oder Luftzylinder und/oder Vorspannventil, insbesondere angetrieben durch einen Ölmotor, so dass insbesondere zunächst durch den Hydraulikzylinder mit dem Luftzylinder ein Unterdruck zu erzeugen ist und anschließend die Verfahrbewegung auf dem Schwenkarm (7) ausführbar ist.

9. Vorrichtung nach einem der Ansprüche 1 bis 8, **dadurch gekennzeichnet, dass** die Unterdruckeinrichtung (5) einen oder mehrere Unterdrucksaugnäpfe (20) umfasst, die insbesondere nebeneinander angeordnet sind.

10. Verfahren zur Verwendung einer Vorrichtung (1) zum Transportieren eines Transportgutes (2), insbesondere eines Kommissionierungspakets, insbesondere mit einem Lastgewicht kleiner als etwa 50 kg, wobei die Vorrichtung zum Anbringen an eine Transporteinrichtung (3) an ein Hubfahrzeug, insbesondere an einen Gabelstapler geeignet ist, umfassend ein Mittel (4) zum zumindest vorübergehenden Aufnehmen das Transportgut (2) mittels einer Unterdruckeinrichtung (5) und/ eines Förderbandes (27) aufgenommen wird, wobei die Unterdruckeinrichtung (5) im Wesentlichen waagerecht an das Transportgut (2) angesetzt wird und/ das Förderband (27) an einer Unterkante (28) des Transportgutes angesetzt wird,
**dadurch gekennzeichnet, dass** die Unterdruckeinrichtung (5) und das Förderband (27) an einem Schwenkarm (7) mit einem Schwenkpunkt (8) angeordnet ist, so dass mittels der Unterdruckeinrichtung (5) und/oder des Förderbandes (27) das Transportgut (2) im Wesentlichen in der Waagerechten (6) um einen vorbestimmten Schwenkwinkel (9) geschwenkt wird, insbesondere um etwa +/- 90°, und/oder auf den Schwenkarm (7) mittels Verfahren der Unterdruckeinrichtung (5) und/oder des Förderbandes (27) aufgezogen und wieder abgeschoben wird.

## Claims

1. Device (1) for transporting a transport good (2) for attachment to a lifting vehicle, in particular to a transport device (3) of a forklift, in particular a picking package, in particular with a load weight of less than about 50 kg, comprising a means (4) for at least temporarily receiving the transport good (2) by means of a vacuum device (5) and / or a conveyor belt (27), whereas the vacuum device (5) is to be attached essentially horizontal (6) to the transport good (2), and / or the conveyor belt (27) is to be attached to a lower edge (28) of the transport good, **characterized by** that the vacuum device (5) and / or the conveyor belt (27) is arranged on a swivel arm (7) with a pivot point (8), which allows, by means of the vacuum device (5) and / or the conveyor belt (27), to handle the transport good (2), in particular a pivoting, in particular with a predetermined pivoting angle (9), in particular of approximately +/- 90 °, within the horizontal (6), and / or depositing of the transported good (2), essentially in the horizontal (6).

2. Apparatus according to claim 1, **characterized in that** the swivel arm (7) is designed with a means for pivoting, in particular an oil motor (30) and / or a means for longitudinal adjustment, driven in particular by a hydraulic means and / or a means that is driven by an oil motor.

3. Apparatus according to claim 1 or 2, **characterized in that** the vacuum device (5) is designed to be longitudinally displaceable with respect to the swivel arm (7), in particular above or below, in particular by means of a chain drive (22) which can be driven in particular by an oil motor (21).

4. Device according to one of claims 1 to 3, **characterized in that** the swivel arm (7) is arranged such that it can be moved laterally with a displacement means (12), in particular in the region of the pivot point (8), in particular by means of a chain drive (23), in particular driven by an oil motor (24), in particular arranged on a transport device (3) of a lifting vehicle.

5. Device according to one of claims 1 to 4, **characterized in that** the vacuum device (5) is pivotable by a second pivoting device from an orientation downward into an horizontal orientation, whereby for transporting of the transport good (2) the vacuum device (5) id thereby pivoted in the horizontal (6).

6. Device according to one of claims to 5, **characterized in that** the vacuum device (5) is arranged movably on the swivel arm (7), so that the transport good (2) can be picked up by means of the vacuum device (5) and can at least be temporarily pulled off on the swivel arm (7) and / or pushed off.

7. Device according to one of claims 1 to 6, **characterized in that** a means (15) for transporting a pallet (16) is provided, whereby at least one or more forks (17) are provided on which the pallet (16) is to be carried and with that the transport good (2) can be loaded and / or unloaded, in particular comprising fork stubs (18) with attachable fork shoes (19) and / or forks equipped with conveyor belts (14) for receiving and / or depositing the pallet.

8. Device according to one of claims 1 to 7, **characterized in that** the vacuum device (5) is supplied with vacuum by a vacuum pump (25), in particular arranged in the region (29) between the swivel arm (7) and travel means (12), wherein the vacuum pump (25) is driven in particular by an electric motor and / or an oil motor, and / or by a combination means comprising hydraulic cylinder and / or air cylinder and / or a preload valve, in particular driven by an oil motor, so that in particular initially by the hydraulic cylinder a negative pressure can be generated with the air cylinder and the movement can then be carried out on the swivel arm (7).

9. Device according to one of claims 1 to 8, **characterized in that** the vacuum device (5) comprises one or more vacuum suction cups (20) which are in particular arranged next to one another.

10. Method for using a device (1) for transporting a transport good (2), in particular a picking package, in particular with a load weight of less than about 50 kg, whereby the device is suitable for attaching to a transport device (3) to a lifting vehicle, in particular to a fork-lift truck, whereby by containing a means (4) for at least temporarily picking up the transport good (2) by a vacuum device (5) and / or a conveyor belt (27), the vacuum device (5) being attached essentially horizontally to the transport good (2) and / or the conveyor belt (27) is attached to a lower edge (28) of the transport good, **characterized by** that the vacuum device (5) and / or the conveyor belt (27) is arranged on a swivel arm (7) with a pivot point (8), so that by means of the vacuum device (5) and / or the conveyor belt (27) the transport good (2) is essentially pivoted horizontally (6) by a predetermined swivel angle (9), in particular by approximately +/- 90 °, and / or onto the swivel arm (7) by means of the vacuum device (5) and / or the conveyor belt (27) is pulled up and pushed off again.

## Revendications

1. Dispositif (1) de transport d'une marchandise de transport (2) à attacher à un véhicule de levage, en particulier à un dispositif de transport (3) d'un chariot élévateur, en particulier un colis de picking, en particulier avec un poids de charge inférieur à environ 50 kg, comprenant un moyen (4) pour recevoir au moins temporairement les marchandises à transporter (2) au moyen d'un dispositif d'aspiration (5) et / ou d'une bande transporteuse (27), le dispositif d'aspiration (5) étant essentiellement horizontal (6) par rapport aux marchandises à transporter (2) doit être attaché, et / ou la bande transporteuse (27) doit être attachée à un bord inférieur (28) des marchandises à transporter, dans lequel le dispositif d'aspiration (5) et / ou la bande transporteuse (27) est disposé sur un bras pivotant (7) avec un point de pivotement (8) qui, au moyen du dispositif d'aspiration (5) et / ou de la bande transporteuse (27), manipule les marchandises de transport (2), en particulier pivotant, en particulier avec un angle de pivotement prédéterminé (9), en particulier d'environ +/- 90 °, dans l'horizontale (6), et / ou dépôt de la marchandise à transporter (2), essentiellement dans l'horizontale (6).

2. Appareil selon la revendication 1, **caractérisé en ce que** le bras pivotant (7) est conçu avec un moyen de pivotement, en particulier un moteur à huile (30) et / ou un moyen de réglage longitudinal, entraîné notamment au moyen d'un fluide hydraulique et / ou d'un moyen par un moteur à huile est entraîné.

3. Appareil selon la revendication 1 ou 2, **caractérisé en ce que** le dispositif d'aspiration (5) est conçu pour être déplaçable longitudinalement par rapport au bras pivotant (7), en particulier au-dessus ou au-dessous, notamment au moyen d'un entraînement à chaîne (22) qui comporte notamment un moteur à huile (21) peut être conduit.

4. Dispositif selon l'une des revendications 1 à 3, **caractérisé en ce que** le bras pivotant (7) est agencé de manière à pouvoir être déplacé latéralement avec un moyen de déplacement (12), notamment au niveau du point de pivot (8), notamment au moyen d'un entraînement par chaîne (23), notamment entraîné par un moteur à huile (24), notamment disposé sur un dispositif de transport (3) d'un véhicule de levage.

5. Dispositif selon l'une des revendications 1 à 4, **caractérisé en ce que** le dispositif d'aspiration (5) avec un deuxième dispositif de pivotement d'une orientation vers le bas dans une orientation vers l'horizontale (6) est pivoté, transportant ainsi les marchandise de transport (2) dispositif d'aspiration (5) à l'horizontale (6) à pivoter.

6. Dispositif selon l'une des revendications à 5, **caractérisé en ce que** le dispositif d'aspiration (5) est disposé de manière mobile sur le bras pivotant (7), de sorte que les marchandise de transport (2) peuvent être ramassées au moyen du dispositif d'aspiration (5) et au moins temporairement sur le bras pivotant (7) peut être retiré et / ou poussé.

7. Dispositif selon l'une des revendications 1 à 6, **caractérisé en ce qu'**un moyen (15) pour transporter une palette (16) est prévu, en particulier deux ou plusieurs fourches (17) sur lesquelles la palette (16) doit être transportée et peut être chargé et / ou déchargé avec la marchandise de transport (2), comprenant notamment des bouts de fourche (18) avec des patins de fourche clipsables (19) et / ou des fourches équipées de bandes transporteuses (14) pour recevoir et / ou déposer la palette.

8. Dispositif selon l'une des revendications 1 à 7, **caractérisé en ce que** le dispositif à vide (5) est alimenté en vide par une pompe à vide (25), notamment disposée dans la zone (29) entre le bras pivotant (7) et les moyens de déplacement (12), dans lequel la pompe à vide (25) est entraînée notamment par un moteur électrique et / ou un moteur à huile, et / ou par un moyen combiné comprenant des vérins hydrauliques et / ou des vérins pneumatiques et / ou une soupape de précharge, notamment entraînée par un moteur à huile, de sorte que notamment initialement par le vérin hydraulique une dépression peut être générée avec le vérin pneumatique et le mouvement peut alors être effectué sur le bras pivotant (7).

9. Dispositif selon l'une des revendications 1 à 8, **caractérisé en ce que** le dispositif à vide (5) comprend une ou plusieurs ventouses à vide (20) qui sont disposées notamment les unes à côté des autres.

10. Procédé d'utilisation d'un dispositif (1) de transport d'une marchandise de transport (2), en particulier d'un colis de mise en service, en particulier d'un poids de charge inférieur à environ 50 kg, le dispositif de fixation d'un dispositif de transport (3) à un véhicule de levage, en particulier à un chariot élévateur à fourche est adapté aux marchandise de transport (2) étant ramassé au moyen d'un dispositif d'aspiration (5) et / ou d'une bande transporteuse (27) au moyen d'au moins un ramasseur temporaire, le dispositif d'aspiration (5) étant attaché essentiellement horizontalement aux marchandise de transport (2) et / ou la bande transporteuse (27) est fixée sur un bord inférieur (28) de la marchandise à transporter, dans lequel le dispositif d'aspiration (5) et / ou la bande transporteuse (27) sont disposés sur un bras pivotant (7) avec un point de pivotement (8), de sorte qu'au moyen du dispositif d'aspiration (5) et / ou de la bande transporteuse (27) les marchandise de transport (2) pivote essentiellement horizontalement (6) d'un angle de pivotement (9) prédéterminé, en particulier d'environ +/- 90 °, et / ou sur le bras pivotant (7) en déplaçant le dispositif d'aspiration (5) et / ou la bande transporteuse (27) est tiré vers le haut et repoussé.
